# EUROPEAN PATENT APPLICATION

(11) **EP 3 620 087 A1**
(43) Date of publication of application: **11.03.2020**
(21) Application number: 19195082.3
(22) Date of filing: 03.09.2019
(51) Int. Cl.: A47J 31/44, A47J 31/50, G07F 13/06

(54) **A COFFEE VENDING MACHINE WITH A MILK FEEDING SYSTEM**

(30) Priority: 04.09.2018 LV 180071
(71) Applicant: Circens, Egons, 2167 Marupe Marupes novads (LV)
(72) Inventor: Circens, Egons, 2167 Marupe Marupes novads (LV)
(74) Representative: Kromanis, Artis

(57) **Abstract**

Invention relates to coffee vending machines, especially to the coffee vending machines with milk feeding systems.

A coffee vending machine with a milk feeding system, wherein the milk feeding system comprises a cooling chamber (2) for cooling down a milk container (4) to be received; a docking member (3) arranged within the cooling chamber (2) and configured to be brought into fluid connection with a milk container (4) for receiving a milk; a milk feeding tube (5) connected to the docking member (3); a milk valve (6) arranged in the cooling chamber (2) and connected to the milk feeding tube (5) for selectively feeding the milk via the milk feeding tube (5); and a water-air tube (9) connected to the milk feeding tube (5) for cleaning the milk feeding tube (5) The water-air tube (9) is connected to the milk feeding tube (5) and arranged in the cooling chamber (2).

## Description

### Field of the invention

Invention relates to coffee vending machines, especially to the coffee vending machines with milk feeding systems.

### Background of the invention

The coffee vending machine is a vending machine that dispenses hot coffee and other coffee beverages. Older models used instant coffee or concentrated liquid coffee and hot or boiling water, and provided condiments such as cream and sugar. Some modern machines prepare various coffee styles such as mochas and lattes and use ground drip coffee, and some fresh-grind the coffee to order using a grinder in the machine. The milk within the coffee vending machine is made from a powdered milk or dried milk.

The machine was invented in the United States by the Rudd-Melikian company in 1947, debuting as the "Kwik Kafe". Several U.S. companies also began manufacturing the machines in 1947, and by 1955 over 60,000 existed in the U.S. Today, coffee vending machines exist in various areas of the world.

The United States patent publication No. US 8,635,944 and the United states patent application No. US 2011/0036244 disclose typical design of a coffee vending machine. Many developments are in the field of coffee making as such but not in providing coffee with a fresh milk.

The United States patent publication No. US 9,016,189 discloses an apparatus for providing milk for a coffee maker comprising a chiller unit or a cooling chamber where a milk container is disposed.

European patent application publication No. EP 3 281 569 discloses a device for foaming liquid, comprising a line system; a pump via which at least one first line of the line system can be connected to at least one storage container that stores the liquid to be foamed and which can be connected to at least one outlet nozzle via a second line of the line system; an air-enrichment element by means of which air can pass through the liquid; and a heating element designed as a continuous flow heater. Moreover, all aforementioned system is arranged in the cooling device.

European patent application publication No. EP 2 583 596 discloses a device for discharging milk and/or milk froth, including a pump to convey milk from a container, wherein both are arranged in a cooling chamber, a flow-heater, and an output for discharging milk, embodied cooperating with each other such that milk conveyed via the pump and heated via the flow-heater can be discharged from the output.

Chinese patent application publication No. CN 101 128 142 discloses an apparatus for preparing coffee and also coffee with milk.

Most of aforementioned coffee machines provide complicated milk feeding systems where the milk is fed to a coffee. Existing milk systems are bulky and requires a complicated procedure to clean up the milk feeding system. Theses milk systems also requires regular maintenance and can be a reason for increased maintenance events.

Therefore, it is necessary to design a milk feeding system for coffee vending machines that is easy to install in existing coffee vending machines, is able to keep the milk fresh for considerable time and is easy to maintain in terms of reliability and cleaning.

### Summary of the invention

The above mentioned aims are achieved by a design of a coffee vending machine with a milk feeding system. The coffee vending machine comprises a coffee machine as already known to the skilled person. The coffee vending machine further comprises the milk feeding system installed within the coffee vending machine. The milk feeding system comprises a cooling chamber configured to cool down an interior thereof to a pre-set or predetermined temperature and to receive a milk container to be cooled and dispensed. The milk feeding system further comprises a docking member arranged within the cooling chamber and configured to be brought into fluid connection with the milk container for receiving milk. The docking member is connected to a milk feeding tube. The docking member as well as a part of the milk feeding tube are arranged in the cooling chamber. The system further comprises a milk valve attached to the milk feeding system to control a flow of a milk from the milk container through the milk feeding tube. The milk valve is also arranged in the cooling chamber. In another embodiment the milk valve is connected to the docking member or is a part of the docking member. The milk valve may be an electrical valve or a mechanical valve, preferably a pinch valve. A function of a milk valve may be performed also by a pump, which when not running, will keep the milk feeding tube closed, and when running, will allow the milk to flow from the milk container via a milk feeding tube. An outlet of the milk feeding tube may be connected to a milk preparation unit or to the coffee machine providing the milk for vending or dispensing in a coffee cup. The milk preparation unit may be any milk preparation unit known to the skilled person.

The milk feeding system further comprises a water-air tube connected to the milk feeding tube for feeding a water and/or air to the milk feeding tube for cleaning said milk feeding tube after milk is dispensed. The water-air tube is connected to the milk feeding tube downstream from the milk valve forming a connection point. The connection point is arranged in the cooling chamber. In result of which the water-air tube is connected to the milk feeding tube within the cooling chamber.

An inner dimeter of the milk feeding tube is in a range from 2.5 mm to 3.5 mm. In another embodiment, the inner diameter of the milk feeding tube from the connection point to the milk preparation unit or to the coffee machine is in a range from 2.5 mm to 3.5 mm. Other tubes and other parts of the milk feeding tube may be with different inner diameters.

The docking member is a hollow needle or any other member that is able to pierce or connect to the milk container and provide a flow of a milk therethrough to the milk feeding tube.

The cooling chamber is configured to keep in a temperature range of about -1 to about 6 degree Celsius, preferably in a temperature range of 3 to 4 degree Celsius.

The milk container may be a bag-in-box. The bag-in-box is a preferable type of container for the storage and transportation of liquids. Nevertheless other containers may be used which can provide suitable environment and protection for milk.

The milk feeding system further comprises a sensor connected to the milk feeding tube. The sensor is configured to detect presence of milk, water and air in the milk feeding tube. The sensor detect presence of milk in the milk container. The sensor may be arranged downstream from the connection point or downstream from a docking member, but before the milk valve.

The coffee vending machine further comprises a cleaning system for the milk feeding tube. The system comprises said water-air tube, a water feeding unit and an air feeding unit.

The cleaning system comprises a water storage tank connected to the water-air tube via a water tube for feeding a water to the milk feeding tube via the water tube and further via the water-air tube. The cleaning system further comprises an air tube arranged outside the cooling chamber and connected to the water-air tube for feeding an air to the milk feeding tube via the water-air tube. The system comprises a water pump arranged outside the cooling chamber and connected to the water tube and configured to feed the water from the water storage tank via the water tube and further via the water-air tube to the milk feeding tube. The system also comprises an air valve also arranged outside the cooling chamber and connected to the air tube and configured to selectively feed or let in the air into the air tube and further via the water-air tube to the milk feeding tube. Due to the fact that said elements are arranged outside the cooling chamber there is no problems in theses element due to a condensation, which is a common reason for increased maintenance of the coffee machines. Therefore, the present invention provides lower maintenance and use costs as well as reduces complexity of the maintenance and use.

The docking member, the milk feeding tube, the milk pinch valve and the connection point are arranged all below the milk container received in the cooling chamber in order to provide the milk flow from the milk container via the docking member, the milk feeding tube, the milk pinch valve and the connection point to the milk preparation unit by gravity. The cooling chamber is positioned above the milk preparation unit in order to provide a milk flow from the milk container received in the cooling chamber to the milk preparation unit by gravity. Due to such arrangement of elements within the coffee machine, the coffee machine does not need additional pumps and associated cleaning of respective pumps. Therefore, the present invention provides lower maintenance and use costs as well as reduces complexity of the maintenance and use. For example, cleaning of milk feeding system involves a use of water and consumption of water depends on amount of elements to be cleaned. Water used for the cleaning cannot be flushed outside the coffee machine and it stays there. Therefore, it is necessary to build such a coffee machine that reduces this consumption of cleaning water and subsequently reduces maintenance events associated with the costs. The present invention solves this problem by aforementioned design of the coffee machine.

The system may further comprise an air pump arranged outside the cooling chamber and connected to the air tube for further intensification of air feed in the milk feeding system when cleaning of the milk feeding tube is performed.

The water storage tank is configured to keep the water in a room or in an environment temperature that is enough to provide effective cleaning. The hot water obtained from other systems of the coffee vending machine also may be used.

The present invention further comprises a method for dispensing a milk in the coffee vending machine and cleaning the milk feeding system.

The method for dispensing a milk in the coffee vending machine comprises the following steps.

The first step includes providing a milk by means of the milk container located in a cooling chamber. The cooling chamber has a door through which the milk container may be inserted and removed from the milk container.

The second step includes feeding of milk from the milk container via the milk feeding tube to the milk preparation unit or the coffee machine for dispensing the milk in a cup to be served. The feeding is controlled by the milk valve selectively opening and closing when a predetermined amount of milk is dispensed.

The milk vending method is completed by the step of stopping the feed of the milk when a predetermined amount of the milk is fed to the milk preparation unit or the coffee machine.

The method for cleaning the milk feeding system, especially the milk feeding tube, comprises the following sub-steps. The first sub-step includes a supply of water to the milk feeding tube so that the milk that stayed in the milk feeding tube after feeding of the milk is flushed out from the milk feeding tube. The next sub-step includes a supply of an air to the milk feeding tube after the supply of the water so that the water that stayed in the milk feeding tube after supplying of the water in previous step is flushed out from the milk feeding tube until only air is present in the milk feeding tube. The designed system provides easy cleaning of said system and possibility to use a milk instead of powder milk in the coffee vending machine.

### Brief description of the drawings

Fig. 1 is a schematic block diagram of an embodiment of a coffee vending machine with a milk feeding system.
Fig. 2 is a schematic block diagram of another embodiment of a coffee vending machine with a milk feeding system.

### Detailed description of the invention

Before explaining the disclosed embodiment of the present invention in detail, it is to be understood that the invention is not limited in its application to the details of the particular arrangements shown, since the invention is capable of other embodiments. Also, the terminology used herein is for the purpose of description and not of limitation.

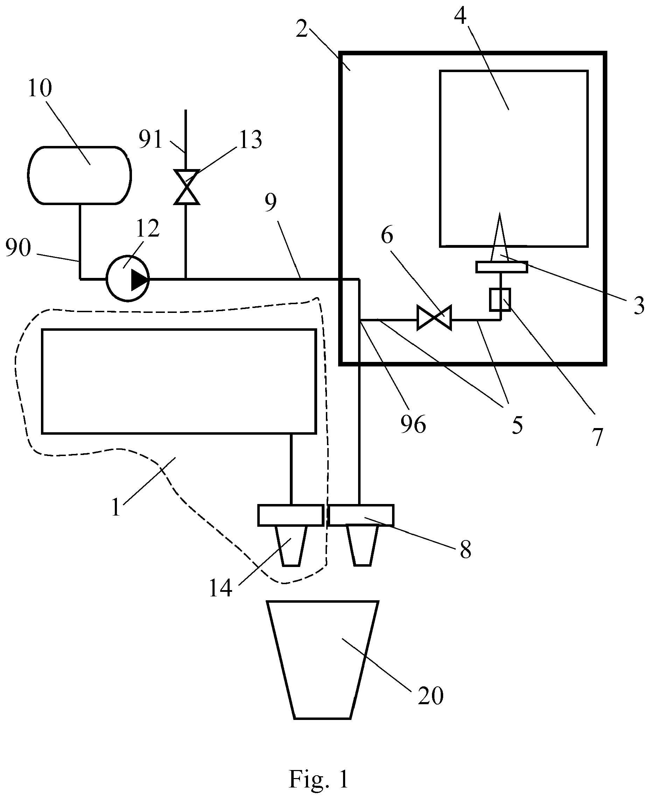

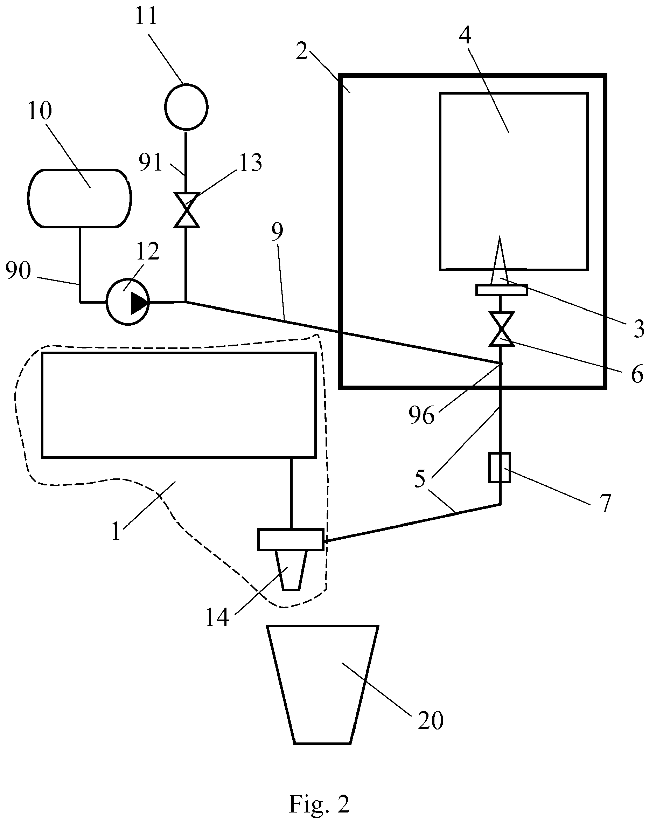

A coffee vending machine with a milk feeding system as seen in Fig. **1** comprises a coffee machine **1** with a coffee preparation unit **14** for a preparation of coffee and dispensing thereof, and a milk feeding system. The milk feeding system comprises a cooling chamber **2** configured to cool down an interior thereof to a predetermined temperature and to receive a milk container **4**. A docking member **3** is arranged within the cooling chamber **2** and connected to the milk container **4** in fluid connection for receiving a milk. The system comprises a milk feeding tube **5** connected to the docking member **3**. A milk valve **6** is arranged in the cooling chamber **2** and connected to the milk feeding tube **5**. In the following embodiment, the milk valve **6** is a pinch valve controlled by solenoid system. The milk valve **6** controls a feed of milk from the milk container **4** via the milk feeding tube **5** to a milk preparation unit **8** and further to a coffee cup **20**. In the following embodiment (Fig. **1**), the milk feeding tube **5** is connected to the milk preparation unit **8** for dispensing prepared milk (steamed milk). In another embodiment (Fig. **2**), the milk feeding tube **5** is connected to the coffee preparation unit **14** for dispensing a raw milk. The cooling chamber **2** is positioned above the milk preparation unit **14** in order to provide a milk flow from the milk container **4** received in the cooling chamber **2** to the milk preparation unit **14** by gravity.

A sensor **7** (Fig. **1**) is provided on the milk feeding tube **5** downstream from the docking member **3** but before the milk valve **6**. In another embodiment (Fig. **2**), the sensor **7** is provided on the milk feeding tube **5** downstream from the milk valve **6**.

The milk feeding system further comprises a sensor **7** connected to the milk feeding tube 5 and configured to detect presence of milk from the milk container **4** within the milk feeding tube **5**. In one embodiment (Fig. **1**), the sensor **7** is connected to the milk feeding tube **5** between the docking member **3** and the milk valve **6**. In another embodiment (Fig. **2**), the sensor **7** is connected to the milk feeding tube **5** downstream from the milk valve **6**.

For cleaning purposes of the milk feeding system, said system comprises a water-air tube **9** connected to the milk feeding tube **5** for feeding a water and air to the milk feeding tube **5**. The water-air tube **9** is connected to the milk feeding tube **5** downstream from the milk valve **6** forming a connection point **96**. The connection point **96** is arranged in the cooling chamber **2** (see Figs. **1** and **2**).

The system (Figs. **1** and **2**) for cleaning purposes further comprises a water storage tank **10** connected to the water-air tube **9** via a water tube **90** for feeding a water to the milk feeding tube **5** via the water tube **90** and further via the water-air tube **9**. A water pump **12** is connected to the water tube **90** and configured to feed the water from the water storage tank **10** via the water tube **90** and further via the water-air tube **9** to the milk feeding tube **5**. The system further comprises an air tube **91** connected to the water-air tube **9** for feeding an air to the milk feeding tube **5** via the water-air tube **9**. An air valve **13** is connected to the air tube **91** and configured to selectively feed or let in the air into the air tube **91** and further via the water-air tube **9** to the milk feeding tube **5**.

In another embodiment (Fig. **2**), the system further comprises an air pump **11** connected to the air tube **91** for feeding an air under pressure into the air tube **91** and further to the milk feeding tube **5**.

The invention has been described with reference to various specific and illustrative embodiments and techniques. However, one skilled in the art will recognize that many variations and modifications may be made while remaining within the scope of the invention as defined in the appended claims.

### List of references

- 1 -: a coffee machine;
- 2 -: a cooling chamber;
- 3 -: a docking member;
- 4 -: a milk container;
- 5 -: a milk feeding tube;
- 6 -: a milk valve;
- 7 -: a sensor;
- 8 -: a milk preparation unit;
- 9 -: a water-air tube;
- 10 -: a water storage tank;
- 11 -: an air pump;
- 12 -: a water pump;
- 13 -: an air valve;
- 14 -: a coffee preparation unit;
- 20 -: a cup;
- 90 -: a water tube;
- 91 -: an air tube; and
- 96 -: a connection point.

## Claims

1. A coffee vending machine with a milk feeding system, comprising:
- a coffee machine (1) for a preparation of coffee and dispensing thereof; and
- a milk feeding system, wherein the milk feeding system comprises:
- a cooling chamber (2) configured to cool down an interior thereof to a predetermined temperature and to receive a milk container (4);
- a docking member (3) arranged within the cooling chamber (2) and configured to be brought into fluid connection with a milk container (4) for receiving a milk;
- a milk feeding tube (5) connected to the docking member (3);
- a milk valve (6) arranged in the cooling chamber (2) and connected to the milk feeding tube (5) or to the docking member (3) for selectively feeding the milk from the milk container (4) via the milk feeding tube (5);
- a water-air tube (9) connected to the milk feeding tube (5) for feeding a water and air to the milk feeding tube (5), wherein the water-air tube (9) is connected to the milk feeding tube (5) downstream from the milk valve (6) forming a connection point (96), wherein the connection point (96) is arranged in the cooling chamber (2);
- a water storage tank (10) connected to the water-air tube (9) via a water tube (90) for feeding a water to the milk feeding tube (5) via the water tube (90) and further via the water-air tube (9);
- an air tube (91) arranged outside the cooling chamber (2) and connected to the water-air tube (9) for feeding an air to the milk feeding tube (5) via the water-air tube (9);
- a water pump (12) arranged outside the cooling chamber (2) and connected to the water tube (90), which also arranged outside the cooling chamber (2), and configured to feed the water from the water storage tank (10) via the water tube (90) and further via the water-air tube (9) to the milk feeding tube (5); and
- an air valve (13) arranged outside the cooling chamber (2) and connected to the air tube (91) and configured to selectively feed or let in the air into the air tube (91) and further via the water-air tube (9) to the milk feeding tube (5),
wherein the docking member (3), the milk feeding tube (5), the milk pinch valve (6) and the connection point (96) are arranged below the milk container (4) received in the cooling chamber (2) in order to provide a milk flow from the milk container (4) by gravity.

2. The coffee vending machine according to claim 1 **characterized in that** the milk feeding system further comprises a sensor (7) connected to the milk feeding tube (5) and configured to detect presence of milk from the milk container (4) within the milk feeding tube (5).

3. The coffee vending machine according to claim 2 **characterized in that** the machine further comprises an air pump (11) arranged outside the cooling chamber (2) and connected to the air tube (91) for feeding an air under pressure into the air tube (91) and further to the milk feeding tube (5).

4. The coffee vending machine according to any of preceding claims, **characterized in that** an outlet of the milk feeding tube (5) is connected to a milk preparation unit (8) or to the coffee machine (1).

5. The coffee vending machine according to Claim 4, **characterized in that** the cooling chamber (2) is positioned above the milk preparation unit (8) in order to provide a milk flow from the milk container (4) received in the cooling chamber (2) to the milk preparation unit (8) by gravity.

6. The coffee vending machine according to any of preceding claims, **characterized in that** the cooling chamber (2) is configured to keep a temperature in a range of about -1 to about 6 degree Celsius, preferably in a temperature range of 3 to 4 degree Celsius.

7. The coffee vending machine according to any of preceding claims, **characterized in that** the milk valve (6) is an electrical valve or a mechanical valve, preferably a pinch valve.

8. The coffee vending machine according to any of preceding claims, **characterized in that** an inner dimeter of the milk feeding tube (5) is in a range from 2.5 mm to 3.5 mm.

9. A method for dispensing a milk in the coffee vending machine according to any of claims 1 to 8, the method comprises the following steps:
- providing the milk by installing the milk container (4) in the cooling chamber (2);
- feeding of the milk from the milk container (4) via the milk feeding tube (5) to the milk preparation unit (8) or the coffee machine (1) by means of the milk valve (6) for dispensing the milk in a cup (20) to be served; and
- stop the feed of the milk by means of the milk valve (6) when a predetermined amount of the milk is fed to the milk preparation unit (8) or the coffee machine (1).

10. The method according to claim 10, wherein the method further comprises a step of cleaning the milk feeding tube (5), wherein the step of cleaning comprises the following sub-steps:
- supplying of a water to the milk feeding tube (5) via the water-air tube (9) so that the milk left in the milk feeding tube (5) after feeding of the milk is flushed out from the milk feeding tube (5); and
- supplying of an air to the milk feeding tube (5) via the water-air tube (9) so that the water left in the milk feeding tube (5) after supplying of the water in previous sub-step is flushed out from the milk feeding tube (5) until the milk feeding tube (5) is almost empty from the water fed in the previous sub-step.
